# EUROPÄISCHE PATENTANMELDUNG

(11) **EP 1 455 032 A2**
(43) Veröffentlichungstag der Anmeldung: **08.09.2004**
(21) Anmeldenummer: 04005367.0
(22) Anmeldetag: 06.03.2004
(51) Int. Cl.: E04G 15/06

(54) **Schalkörper für eine in eine Wand einzubetonierende Durchführung von Kabeln oder Rohrleitungen**

(30) Priorität: 07.03.2003 DE 10309924
(71) Anmelder: Roxtec GmbH, 22111 Hamburg (DE)
(72) Erfinder: Bröder, Jan, 25421 Pinneberg (DE)
(74) Vertreter: Gosch, Wolf-Dietrich

(57) **Zusammenfassung**

Schalkörper für einen in eine Wand einzubetonierenden Rahmen für die Aufnahme einer modularen Durchführung von Kabeln oder Rohrleitungen durch die Wand mit einem den Rahmen vollständig ausfüllenden quaderförmigen Füllteil, wobei der Füllteil 2 an seinem in die zu betonierende Wand hineinragenden Bereich mit einem zylindrischen Füllkörper 3 verbunden ist, der die zu betonierende Wand vollständig durchdringt. Der zylindrische Füllkörper ist in seinem Durchmesser einem Außendurchmesser eines benachbart zum Rahmen 1 und im Anschluss an diesen in die Wand einzusetzenden Schutzrohres angepasst.

## Beschreibung

Die Erfindung betrifft einen Schalkörper für einen in eine Wand einzubetonierenden Rahmen für die Aufnahme einer modularen Durchführung von Kabeln oder Rohrleitungen durch die Wand mit einem den Rahmen vollständig ausfüllenden quaderförmigen Füllteil.

Bei der Herstellung einer Betonwand, durch die Kabel oder Rohrleitungen hindurchgeführt werden sollen, ist es von Bedeutung, dass zum einen der Rahmen, der die modulare Durchführung aufnehmen soll, in der Schalung an der Monierung befestigt wird und durch den Einsatz eines Schalkörpers sowohl der Rahmen selbst als auch der hinter ihm liegende Bereich der Wand bis zu der dem Rahmen abgewandten Seite der Schalung von einem Schalkörper vollständig ausgefüllt wird, damit nach Aushärten des Betons und Entfernung des Schalkörpers sowohl der Rahmen als auch der ihm benachbarte Bereich der Wand sauber und frei von Betonresten für die Aufnahme der Durchführung hergestellt wird. Dies geschieht in der Regel durch Hartschaumblöcke, normalerweise aus Styropor, die vom Monteur auf der Baustelle nach den Innenabmessungen des Rahmens einerseits und in ihrer Länge der vorgesehenen Wandstärke entsprechend andererseits zurechtgeschnitten und in den Rahmen eingesetzt werden. Nach Aushärten des Betons und nach Entfernung des Schalkörpers schließt sich an den Rahmen eine quaderförmige Öffnung in der Betonwand an.

Wenn jedoch hinter dem Rahmen in der Wand ein Schutzrohr für die Aufnahme der Kabel oder Rohrleitungen angeordnet werden soll, muss dieses mit erheblichem Aufwand in der quaderförmigen Ausnehmung der Wand befestigt werden.

Aufgabe der vorliegenden Erfindung ist es daher, einen Schalkörper der eingangs genannten Art zu schaffen, mit dessen Hilfe im Anschluss an den Rahmen zylindrische Öffnung zur Aufnahme eines Schutzrohres in der Betonwand hergestellt werden kann.

Diese Aufgabe wird erfindungsgemäß dadurch gelöst, dass der Füllteil an seiner in die zu betonierende Wand hineinragenden Bereich mit einem zylindrischen Füllkörper verbunden ist, der die zu betonierende Wand vollständig durchdringt.
Dieser Schalkörper wird insoweit vollständig vorgefertigt an die Baustelle geliefert, dass der Monteur nur noch den zylindrischen Teil auf die richtige Länge bringen muss und sonstige Arbeiten zur Erzeugung einer runden Ausnehmung in der Wand entfallen können. Hierdurch wird sichergestellt, dass das einzusetzende Schutzrohr bzw. eine das Schutzrohr in der Wand eindichtende Ringdichtung (Rollring oder Ringraumdichtung) auch genau in die Öffnung passt, dass im Verlauf der Ausnehmung keinerlei Unebenheiten, wie sie beispielsweise durch das Absägen von Schaumteilen entstehen können, störend wirken.

Weitere Einzelheiten der Erfindung ergeben sich aus der nachfolgenden ausführlichen Beschreibung sowie den beigefügten Zeichnungen, in denen eine bevorzugte Ausführungsform der Erfindung beispielsweise veranschaulicht ist.

In den Zeichnungen zeigen:
- Fig. 1:: Eine Seitenansicht eines in einen Rahmen eingesetzten Schalkörpers und
- Fig. 2:: eine Frontansicht eines Schalkörpers.

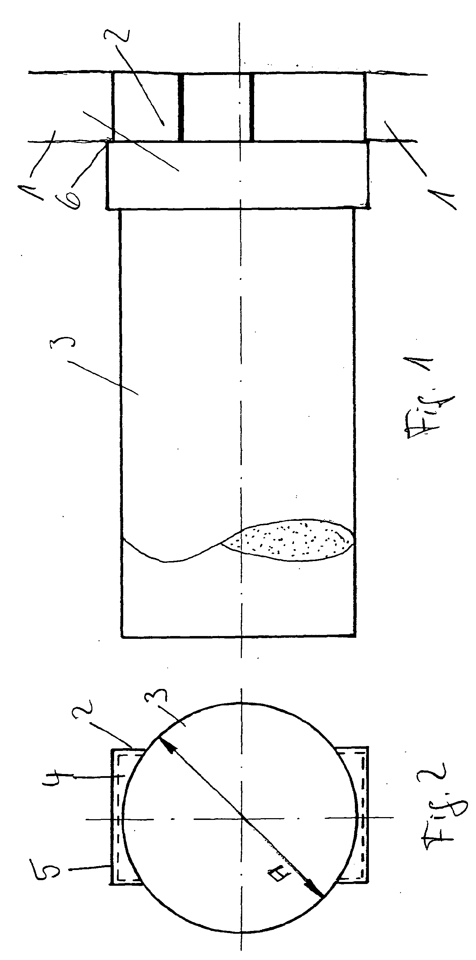

Ein Schalkörper besteht im wesentlichen aus einem einen Rahmen 1 vollständig ausfüllenden quaderförmigen Füllteil 2, der an seinem in die zu betonierende Wand hineinragenden Bereich mit einem zylindrischen Füllkörper 3 verbunden ist, der die zu betonierende Wand vollständig durchdringt. Dabei ist der zylindrischen Füllkörper 3 in seinem Durchmesser einem Außendurchmesser eines benachbart zum Rahmen 1 und im Anschluss an diesen in die Wand einzusetzenden Schutzrohres angepasst. So werden für die Durchführung von Leitungen durch Wände handelsübliche Schutzrohre mit Außendurchmessern 110, 150, 160 und 200 mm verwandt. Dementsprechend werden Schalkörper mit diesen Außenmaßen unter Berücksichtigung jeweils einer geringfügigen Toleranz zur Einführung des Schutzrohres hergestellt. Wenn das Schutzrohr seinerseits in der Wand eingedichtet werden soll, muss der Schalkörper mit seinem Außendurchmesser dem Außendurchmesser der Ringdichtung (Rollring oder Ringraumdichtung) entsprechen.

Der zylindrische Füllkörper 3 ist so lang bemessen, dass er für alle in Frage kommenden Wandstärken lang genug ist und an der Baustelle entsprechend der vorgesehenen Wandstärke gekürzt werden kann.

Der quaderförmige Füllteil 2 besteht aus zwei Teilquadern 4, 5 mit unterschiedlichen Abmessungen, wobei der dem zylindrischen Füllkörper 3 abgewandte Teilquader 4 den Innenabmessungen des Rahmens 1 entspricht. Der dem zylindrischen Füllkörper 3 benachbarte Teilquader 5 weist größere Abmessungen auf als der ihm abgewandte Teilquader 4 und bildet eine Abstützung auf dem ihm zugewandten Rand 6 des Rahmens 1 aus. Der Schalkörper besteht aus Hartschaum, vorzugsweise aus Styropor. Er ist einstückig ausgebildet.

Nach Befestigung des Rahmens 1 an der Monierung für eine mit einer Durchführung von Kabeln oder Rohrleitungen zu versehenden Betonwand wird der Schalkörper mit seinem Teilquader 4 des quaderförmigen Füllteils 2 in den Rahmen 1 eingeschoben, so dass er diesen vollständig ausfüllt. Der Teilquader 4 ist dabei so bemessen, dass er den Rahmen 1 von innen klemmend beaufschlagt. Zusätzlich stützt sich der Schalkörper mit seinem größeren Teilquader 5 auf dem Rand 6 des Rahmens 1 ab, wodurch der Schalkörper unverrückbar fest im Rahmen 1 sitzt und nicht etwa beim Gießen des Betons aus dem Rahmen herausfallen kann. Nach Aushärten des Betons kann der Schalkörper zerstört werden und aus der von ihm frei gehaltenen Öffnung in der Wand herausgebrochen oder herausgebrannt werden. Die von ihm erzeugte runde Öffnung in der Wand ist so sauber und glatt, dass ein Schutzrohr ohne Schwierigkeiten in die Öffnung bis an den Rahmen 1 heran eingeführt werden kann.

## Patentansprüche

1. Schalkörper für einen in eine Wand einzubetonierenden Rahmen für die Aufnahme einer modularen Durchführungen von Kabeln oder Rohrleitungen durch die Wand mit einem den Rahmen vollständig ausfüllenden quaderförmigen Füllteil, **dadurch gekennzeichnet, dass** der Füllteil (2) an seinem in die zu betonierende Wand hineinragenden Bereich mit einem zylindrischen Füllkörper (3) verbunden ist, der die zu betonierende Wand vollständig durchdringt.

2. Schalkörper nach Anspruch 1, **dadurch gekennzeichnet, dass** der zylindrische Füllkörper (3) in seinem Durchmesser einem Außendurchmesser eines benachbart zum Rahmen (1) und im Anschluss an diesen in die Wand einzusetzenden Schutzrohres angepasst ist.

3. Schalkörper nach Anspruch 1 und 2, **dadurch gekennzeichnet, dass** der zylindrische Füllkörper (3) in seinem Durchmesser an den Außendurchmesser einer ein Schutzrohr in der Betonwand eindichtende Ringdichtung (Rollring oder Ringraumdichtung) angepasst ist.

4. Schalkörper nach Anspruch 1 bis 3, **dadurch gekennzeichnet, dass** der zylindrische Füllkörper (3) länger ausgebildet ist als die Wandstärke der die Durchführung aufnehmenden Wand.

5. Schalkörper nach Anspruch 1 bis 4, **dadurch gekennzeichnet, dass** der quaderförmige Füllteil (2) aus zwei Teilquadern (4, 5) mit unterschiedlichen Abmessungen besteht, wobei der dem zylindrischen Füllkörper (3) abgewandte Teilquader (4) den Innenabmessungen des Rahmens (1) entspricht.

6. Schalkörper nach Anspruch 1 bis 5, **dadurch gekennzeichnet, dass** der dem zylindrischen Füllkörper (3) benachbarte Teilquader (5) größere Abmessungen aufweist als der ihm abgewandte Teilquader (4) und sich auf dem Rand (6) des ihm zugewandten Rahmens (1) abstützt.

7. Schalkörper nach Anspruch 1 bis 6, **dadurch gekennzeichnet, dass** er aus Hartschaum besteht.

8. Schalkörper nach Anspruch 7, **dadurch gekennzeichnet, dass** er aus Styropor besteht.

9. Schalkörper nach Anspruch 1 bis 8, **dadurch gekennzeichnet, dass** er einstückig ausgebildet ist.
